# EUROPÄISCHE PATENTANMELDUNG

(11) **EP 2 998 213 A1**
(43) Veröffentlichungstag der Anmeldung: **23.03.2016**
(21) Anmeldenummer: 15176398.4
(22) Anmeldetag: 13.07.2015
(51) Int. Cl.: B62M 6/90

(54) **RAHMENELEMENT ZUR AUFNAHME EINES ENERGIESPEICHER ZUR VERWENDUNG BEI EINEM ZWEIRAD**

(30) Priorität: 18.09.2014 DE 202014007474 U
(71) Anmelder: ROBERT BOSCH GMBH, 70442 Stuttgart (DE)
(72) Erfinder: Kohlrausch, Philipp, 70180 Stuttgart (DE); Maier, Simone, 72070 Tuebingen (DE); Jabs, Volker, 72144 Dusslingen (DE); Schumacher, Christoph, 72144 Dusslingen (DE); Tenzer, Martin, 72622 Nuertingen (DE)

(57) **Zusammenfassung**

Mit der vorliegenden Erfindung wird ein Rahmenelement (100, 200, 300, 400, 500, 600, 700) beansprucht, welches Teil eines Fahrradrahmens sein kann. Dieses Rahmenelement, z.B. ein Sattelrohr (60), ein Unterrohr (40) oder ein Oberrohr (50) des Fahrradrahmens, ist dazu vorgesehen, eine Energieversorgungseinheit (570), z.B. einen Akkumulator oder eine Batterie aufzunehmen, um damit den Antrieb eines Elektrofahrrads zu betreiben. Hierzu ist in dem Rahmenelement bzw. dem Rohr eine längliche Ausnehmung vorgesehen, so dass ein U-Profil entsteht. Der wesentlichen Kern der Erfindung besteht dabei darin, dass zusätzlich zu dem U-Profil zur Aufnahme der Energieversorgungseinheit wenigstens ein Zwischenboden (110, 210, 310, 312, 314, 316, 410, 470, 510, 610, 710) in dem Rahmenelement bzw. dem U-Profil vorgesehen ist, welcher wenigstens teilweise parallel zum Boden des U-Profils angeordnet und von ihm beabstandet ist.

## Beschreibung

Die Erfindung betrifft ein Rahmenelement zur Aufnahme einer Energiespeichereinheit für einen Fahrradrahmen, einen entsprechenden Fahrradrahmen, eine Energiespeichereinheit, die in dem Rahmenelement untergebracht werden kann sowie ein Fahrrad bei dem ein derartiges Rahmenelement verwendet wird.

### Stand der Technik

Bei der Nutzung von elektrisch betriebenen Fahrrädern besteht die Notwendigkeit, den zugehörigen Energiespeicher, z.B. einen Akkumulator am Fahrrad unterzubringen, möglichst ohne die Beweglichkeit des Fahrers einzuschränken. Üblicherweise wird der Energiespeicher am Fahrradrahmen, bestehend aus Unterrohr 40 und Sattelrohr 60 ggf. auch Oberrohr 50 befestigt. Dabei besteht gerade beim Sattelrohr 60 die Möglichkeit, den Energiespeicher im Rahmendreieck 40, 50 und 60 oder zwischen Sattelrohr 60 und Hinterrad, z.B. im hinteren Rahmendreieck bzw. hinter dem Sattelrohr anzubringen. In letzterem Fall vergrößert sich u. U. dabei der Abstand zwischen Tretkurbel und Hinterradachse, um genügend Platz für den meist voluminösen Energiespeicher zu schaffen. Eine weitere Möglichkeit der Unterbringung des Energiespeichers besteht darin, diesen am Gepäckträger zu befestigen.

Aus der Schrift EP 2 134 592 B1 ist die Befestigung einer Batterie am Unterrohr bekannt. Hierbei ist das Unterrohr aus Stabilitätsgründen als belastungstragendes, mehrräumiges Rohr mit einer Ausschneidung zum Empfang der Batterie ausgestaltet. Dabei ist vorgesehen, dass sich die seitlich offene Ausschneidung in wenigstens einem Raum im mehrräumigen Rohr erstreckt und wenigstens ein weiterer Raum im Wesentlichen intakt ist.

Weiterhin ist aus der EP 1 982 909 B1 eine Kombination aus Batterie und Fahrradrahmen bekannt, bei dem in einem der Rohre des Fahrradrahmens eine bzgl. der Seitenwand tiefgeschnittene Oberkante zur Erzeugung einer zum Teil seitlich offenen Aussparung vorgesehen ist, in die ein Rastrahmen eingesetzt werden kann. Dieser Rastrahmen wird vollständig in die Aussparung eingeführt, so dass er die nachträglich eingeführte Batterie vollständig umschließen kann.

Aus der DE 20 2013 008187 U1 ist eine Aufnahme eines Fahrradakkumulators in einem Rahmenelement bekannt, bei dem ein länglicher Einschnitt in einer planen Fläche eines Rohrs des Fahrradrahmens zur Aufnahme einer Energieversorgungseinheit vorgesehen ist.

### Offenbarung der Erfindung

Mit der vorliegenden Erfindung wird ein Rahmenelement beansprucht, welches Teil eines Fahrradrahmens sein kann. Dieses Rahmenelement, z.B. ein Sattelrohr, ein Unterrohr oder ein Oberrohr des Fahrradrahmens, ist dazu vorgesehen, eine Energieversorgungseinheit, z.B. einen Akkumulator oder eine Batterie aufzunehmen, um damit den Antrieb eines Elektrofahrrads zu betreiben. Hierzu ist in dem Rahmenelement bzw. dem Rohr eine längliche Ausnehmung vorgesehen, so dass ein U-Profil entsteht. Der wesentlichen Kern der Erfindung besteht dabei darin, dass zusätzlich zu dem U-Profil zur Aufnahme der Energieversorgungseinheit wenigstens ein Zwischenboden in dem Rahmenelement bzw. dem U-Profil vorgesehen ist, welcher wenigstens teilweise parallel zum Boden des U-Profils angeordnet und von ihm beabstandet ist.

Durch die Einfügung eines derartigen Zwischenboden kann eine geeignete Halterung bzw. Stützung geschaffen werden, so dass auch schmälere Energieversorgungseinheiten eingesetzt werden können, die nicht den ganzen Innenraum des Rahmenelements einnehmen. Darüber hinaus kann durch den Zwischenboden die Steifigkeit und Belastbarkeit des Rahmenelements bzw. des U-Profils erhöht werden.

Zur Ausgestaltung des Rahmenelements kann vorgesehen sein, dass die Seitenwände des U-Profils jeweils mindestens zwei gerade Bereiche aufweist, die in einem stumpfen Winkel miteinander verbunden sind. Dabei sind insbesondere Verbindungen mit einem Winkel von 135 bis 160° denkbar.

Darüber hinaus ist jedoch auch denkbar, dass das Rahmenelement ein rundes U-Profil aufweist, wobei zumindest der Boden des U-Profils, d.h. der Boden der Ausnehmung, eine weitestgehend ebene Fläche aufweist.

Weiterhin kann vorgesehen sein, dass der wenigstens eine Zwischenboden nicht über die gesamte Länge der Ausnehmung, sondern nur über einem Teil des Bodens der Ausnehmung bzw. des U-Profils angeordnet ist. Besonders vorteilhaft ist dabei eine Ausgestaltung, bei der der Zwischenboden von einem oder von beidem Enden der Ausnehmung beabstandet ist, so dass kein direkter mechanischer Anschlag vorliegt. Hierbei kann dieser Abstand so groß sein, dass Luft oder Flüssigkeit zwischen den Ebenen leicht ausgetauscht werden können. Darüber hinaus ist jedoch auch ein Abstand von mehreren Zentimetern möglich.

Besonders vorteilhaft ist eine Weiterbildung der Erfindung, bei dem der Boden des Rahmenelements in der Ausnehmung bzw. im U-Profil und/oder der wenigstens eine Zwischenboden Öffnungen bzw. Löcher aufweist. Durch diese Ausgestaltung lässt sich ein Luftstrom erzeugen, der von außen in das Rahmenelement eintritt und entlang einer eingesetzten Energieversorgungseinheit verläuft, um diese zu kühlen. Hierzu kann beispielsweise auch ein weiteres Halterungselement verwendet werden, welches auf den Zwischenboden aufgebracht wird und an seiner Unterseite Führungsrinnen aufweist. Zur Leitung des Luftstroms kann optional auch ein kleiner Lüfter vorgesehen sein, der in dem Rahmenelement, z.B. zwischen Boden des U-Profils und dem Zwischenboden angeordnet ist.

In einer weiteren Ausgestaltung der Erfindung kann vorgesehen sein, dass wenigstens zwei Zwischenböden vorgesehen sind, z.B. in Form von Querstreben, die entlang der Ausnehmung parallel angeordnet sind. Typischerweise besteht zwischen diesen Zwischenböden ein Abstand. Der Vorteil dabei liegt darin, dass zur Halterung der Energieversorgungseinheit keine durchgehende Strebe eingesetzt werden muss. Durch die Anordnung mehrere Querstreben kann darüber hinaus auch eine zielgerichtete Versteifung und Erhöhung der Robustheit des Rahmenelements bei vermindertem Materialeinsatz erreicht werden.

Optional kann auch vorgesehen sein, dass statt der Zwischenböden L-förmige Element rechts und Links an die Seitenwände des U-Profils angebracht werden, auf denen die Energieversorgungseinheit bzw. die Halterung für die Energieversorgungseinheit aufsitzen kann.

Zusätzlich kann vorgesehen sein, dass neben dem bisher beschriebenen wenigstens ersten Zwischenboden, der im Wesentlichen auf einer Ebene über dem Boden der Ausnehmung bzw. des U-Profils angeordnet ist, ein weiterer zweiter Zwischenboden vorgesehen ist, der sich auf einer andere Ebene, d.h. höhenversetzt zum ersten Zwischenboden befindet. So kann der zweite Zwischenboden beispielsweise an einem oder anderem Ende des ersten Zwischenboden etwas höher angeordnet sein, um ein Verrutschen der Energieversorgungseinheit bzw. der Halterung für die Energieversorgungseinheit zu verhindern. Dabei kann der zweite Zwischenboden sowohl direkt über dem ersten Zwischenboden angeordnet sein aber auch etwas seitlich versetzt, d.h. beabstandet in Richtung des Endes der Ausnehmung. Optional kann sogar vorgesehen sein, dass dieser zweite Zwischenboden direkt an das Ende der Ausnehmung und somit an die Wand anstößt. Um die Funktion des Verhinderns eines Verrutschens zu erfüllen, sollte der zweite Zwischenboden wenigstens um die Dicke des Bodens des ersten Zwischenbodens höher angebracht sein.

Um die Steifigkeit des Rahmenelements und somit des Fahrradrahmens weiter zu erhöhen, kann vorgesehen sein, zwischen dem Boden der Ausnehmung bzw. des U-Profils und dem wenigstens einen (ersten) Zwischenboden zumindest teilweise ein entsprechendes Material einzubringen. Hierbei sind insbesondere Materialien denkbar, die verhärten und alleine oder im Zusammenspiel mit dem Material des Rahmenelements die Bruchfestigkeit hinsichtlich Verbiegung, Verdrehung, Spannungen, Scherung oder Torsion erhöhen. So kann beispielsweise vorgesehen sein, dass zwischen dem Boden der Ausnehmung und dem Zwischenboden Vollmaterial vorgesehen ist, welches aus dem gleichen Material wie das Rahmenelement besteht. Alternativ oder zusätzlich kann vorgesehen sein, dass das Füllmaterial auch für die Kühlung bzw. die Abführung von Wärme vorgesehen ist.

Besonders vorteilhaft ist die Befestigung des Zwischenbodens durch ein Anbringen an den Innenseiten der Seitenwände der Ausnehmung bzw. des U-Profils. Hierbei kann beispielsweise eine Aufhängung ebenfalls in Form eines (abgewandelten) Us verwendet werden, bei denen die äußeren Bereiche fest mit den Seitenwänden verbunden ist. Denkbare Befestigungsmöglichkeiten sind dabei schweissen, nieten oder kleben. Es ist jedoch auch denkbar, dass der Zwischenboden und das restliche Rahmenelement einstückig, z.B. in Form eines Gusses erzeugt wird. Weiterhin ist möglich, dass der Boden des Zwischenbodens mittels jeweils an den Seiten befindlicher Aufhängungen an der Seitenwand der Ausnehmung befestigt wird. So kann diese Aufhängung beispielsweise jeweils zwei gerade Elemente aufweisen, die in einem stumpfen Winkel miteinander verbunden sind.

In einer alternativen Ausgestaltung der Erfindung ist vorgesehen, dass der Zwischenboden mittels eines T-Trägers realisiert wird, der auf dem Boden des U-Profils angeordnet ist. Auch in dieser Ausgestaltung kann vorgesehen sein, dass dieser T-Träger nur auf einem Teil des Bodens des U-Profils angeordnet ist und optional von den Enden der Ausnehmung beabstandet ist.

Zusätzlich zu den vorstehend beschriebenen möglichen erfindungsgemäßen Ausführungen des Rahmenelements soll auch ein Fahrradrahmen bzw. ein Fahrrad beansprucht werden, der ein derartiges Rahmenelement aufweist. Dabei ist insbesondere vorgesehen, dass es sich bei dem Fahrrad um ein mittels eines separaten elektrisch betriebenen Fahrrads handelt. Dabei soll die Energieversorgungseinheit in das erfindungsgemäße Rahmenelement einfügbar sein, unbeachtet der Richtung. Dies bedeutet, dass die Energieversorgungseinheit sowohl von oben, von der Seite aber auch von unten einführbar sein soll. Bei einer besonderen Ausgestaltung des Rahmenelements ist sogar eine Einführung längs der Ausnehmung denkbar, beispielsweise indem das Rahmenelement das Sattelrohr repräsentiert und die

Energieversorgungseinheit am Sattel entlang eingebracht werden kann.

Weitere Vorteile ergeben sich aus der nachfolgenden Beschreibung von Ausführungsbeispielen bzw. aus den abhängigen Patentansprüchen.

### Kurze Beschreibung der Zeichnungen

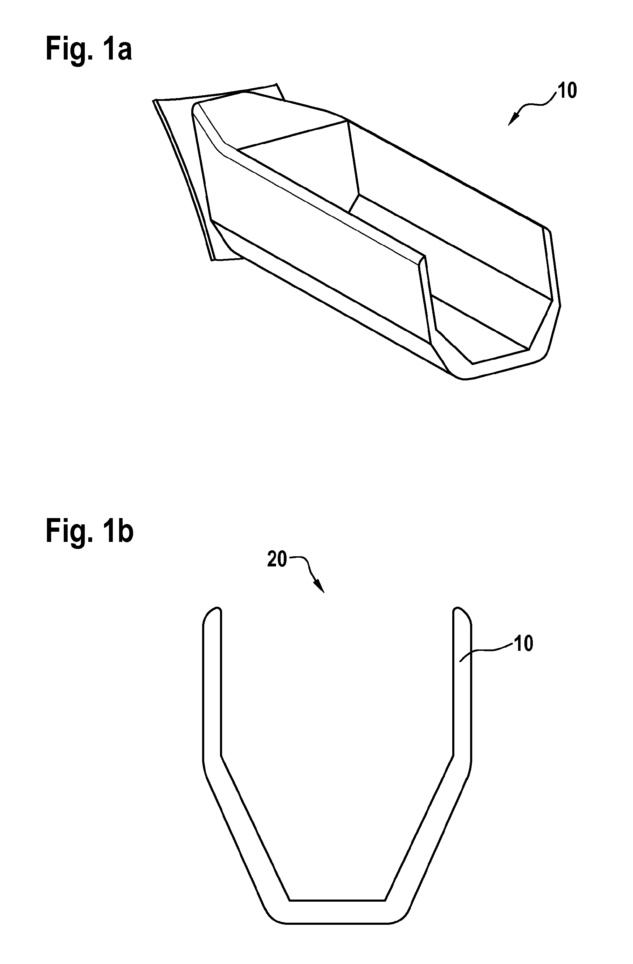

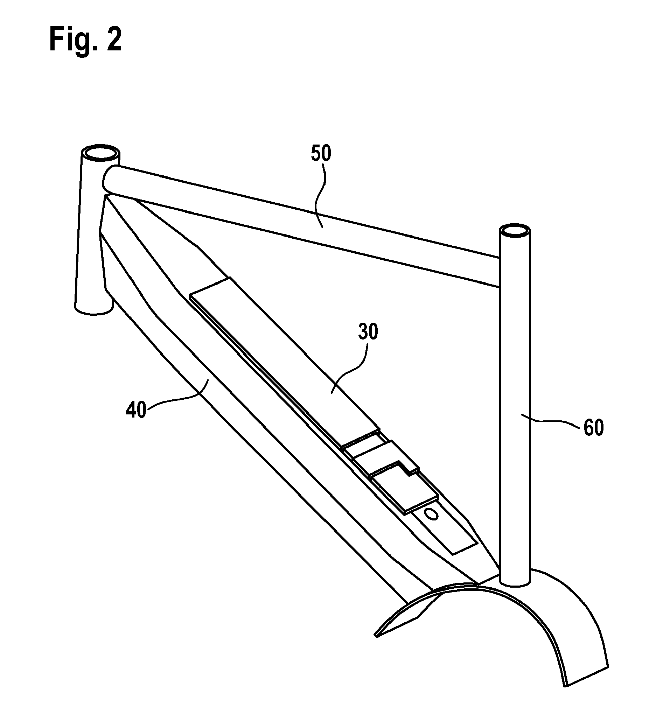

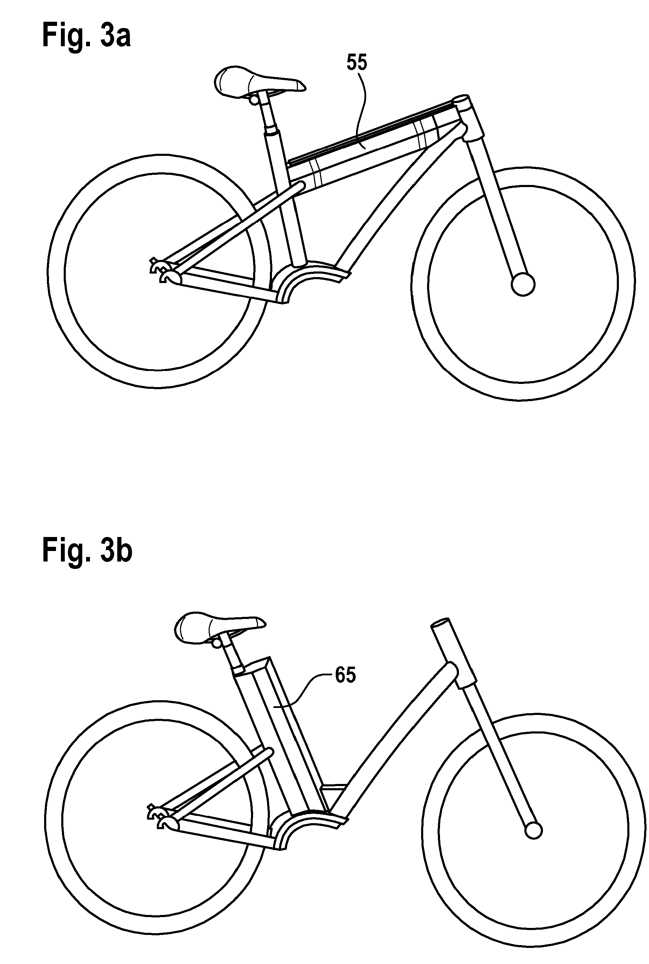

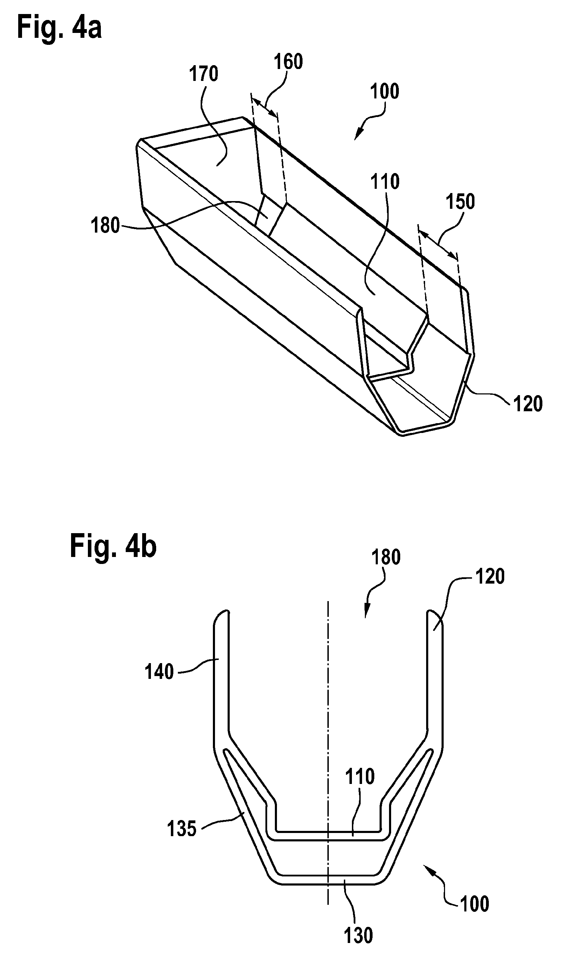

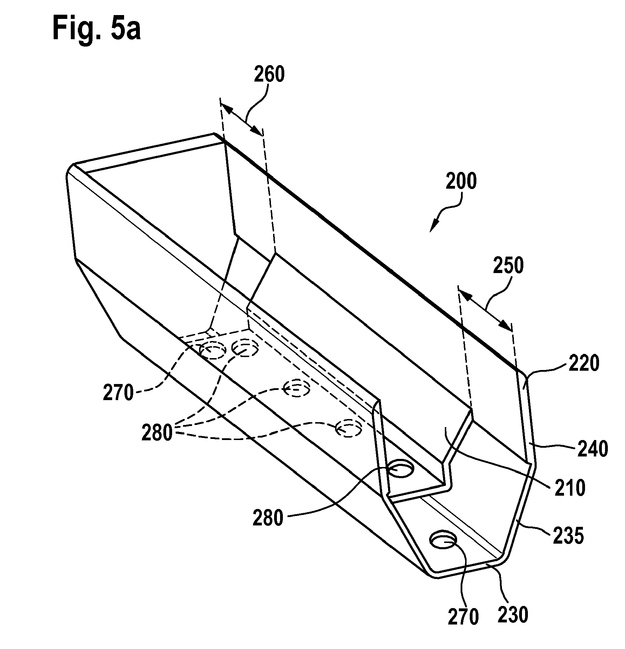

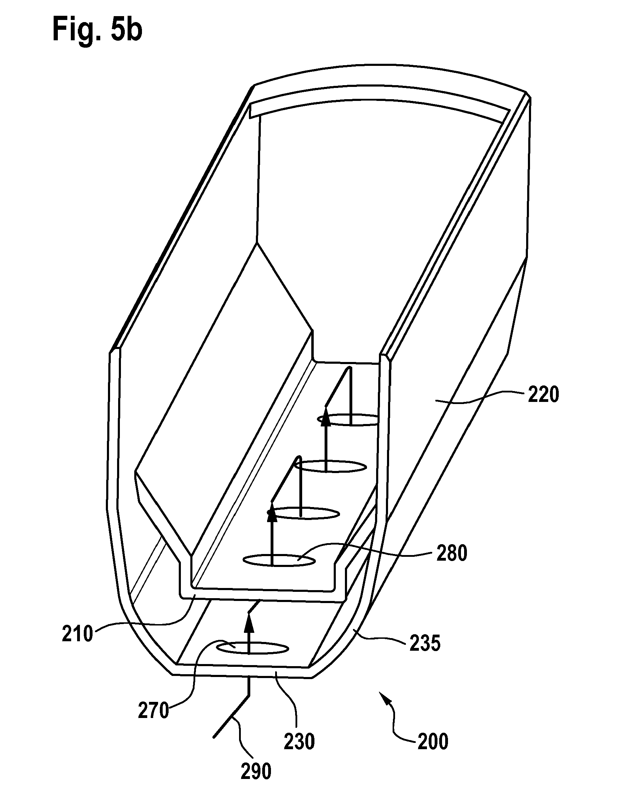

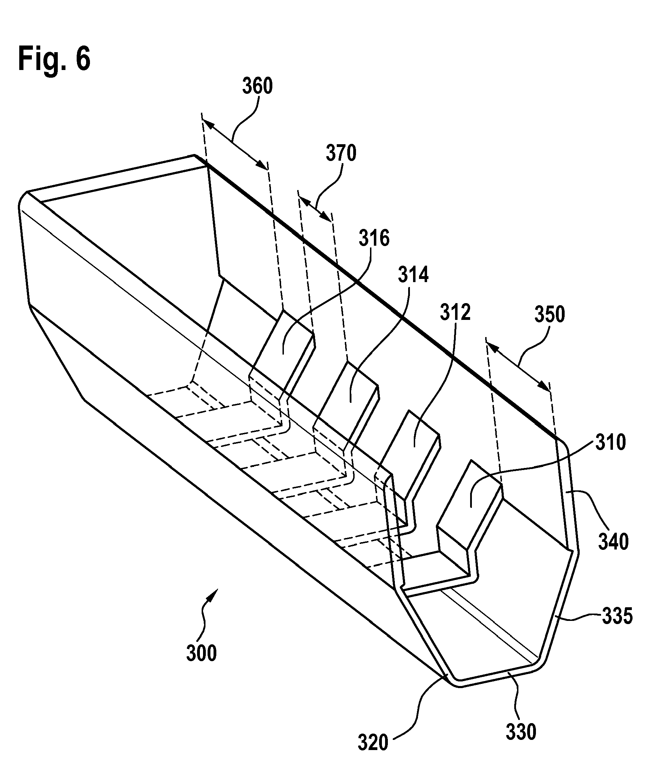

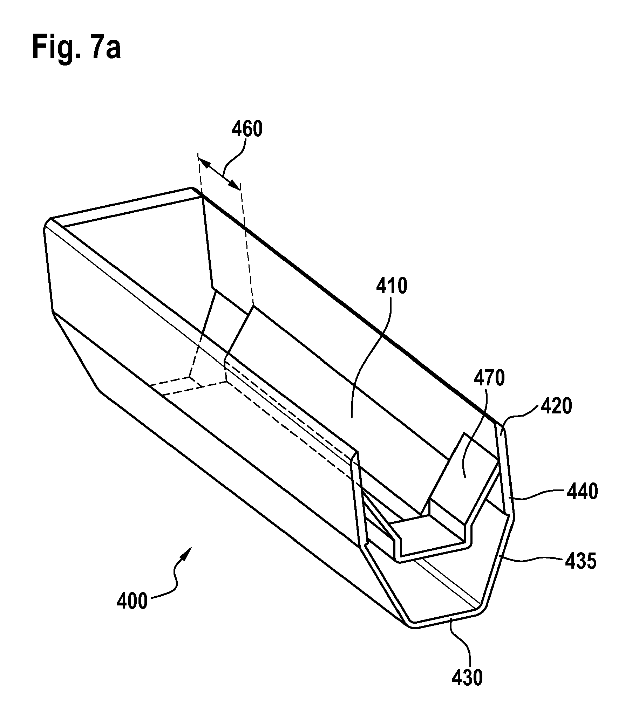

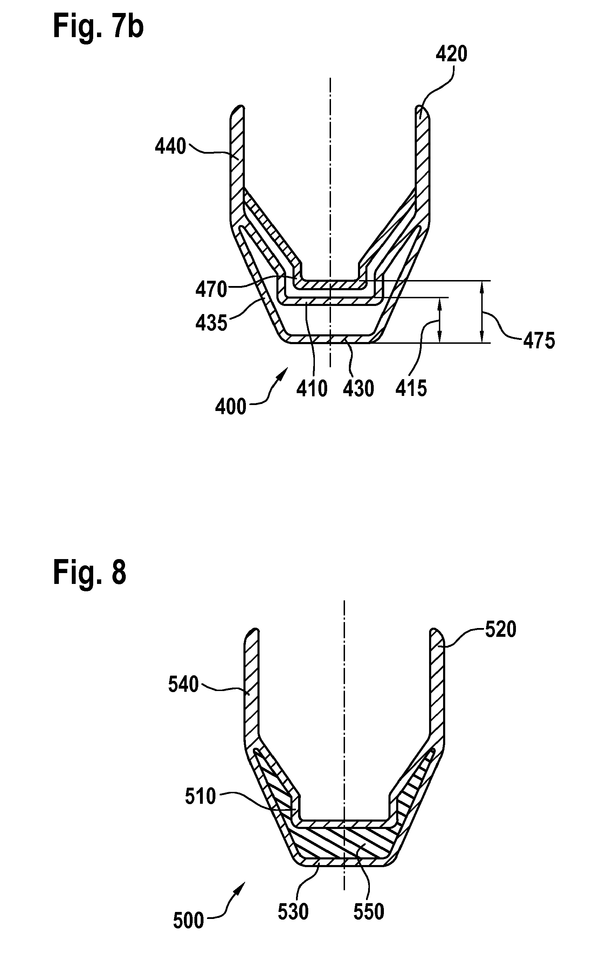

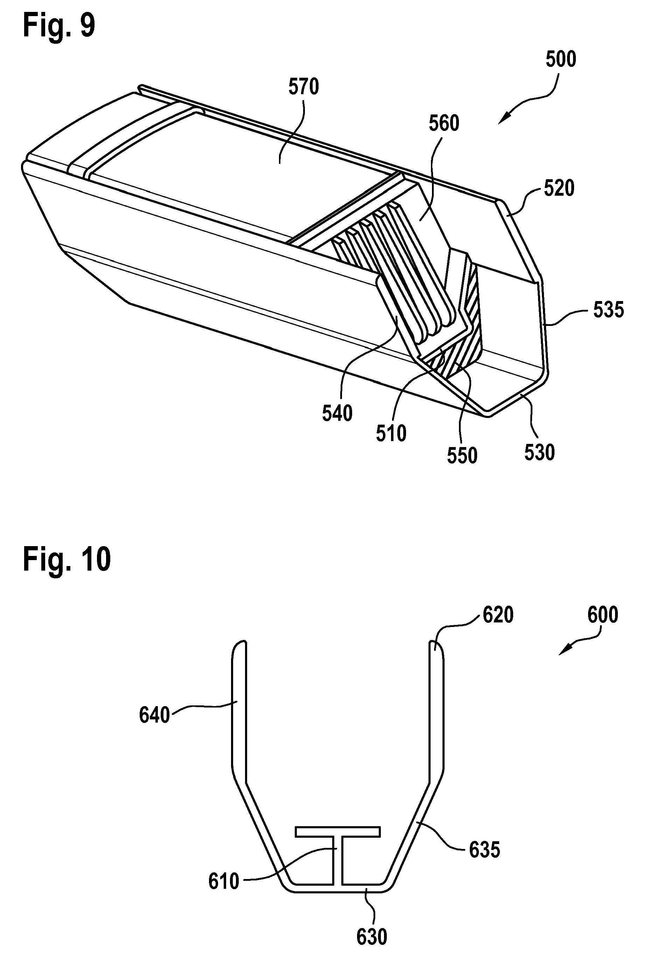

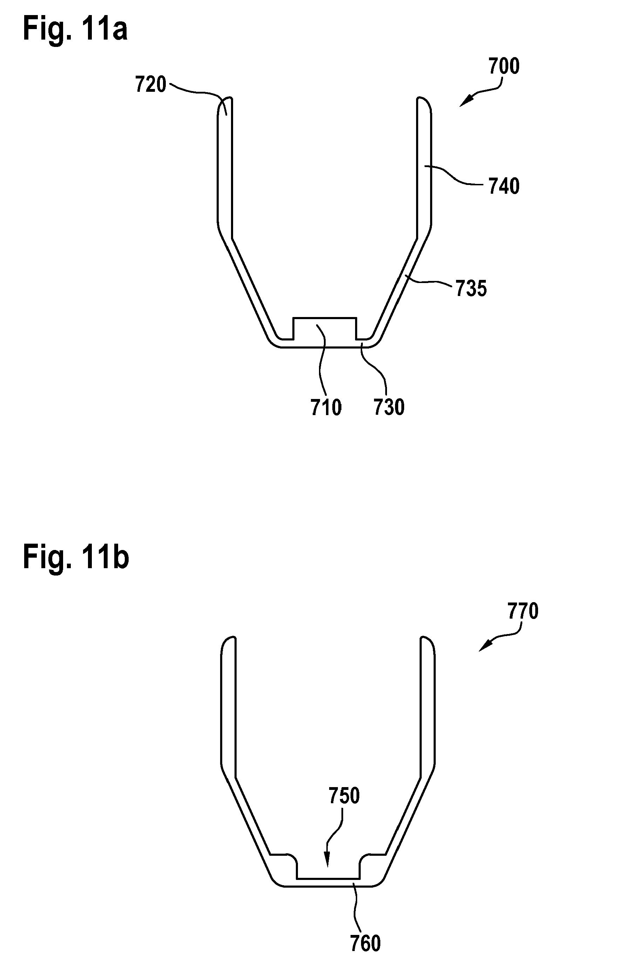

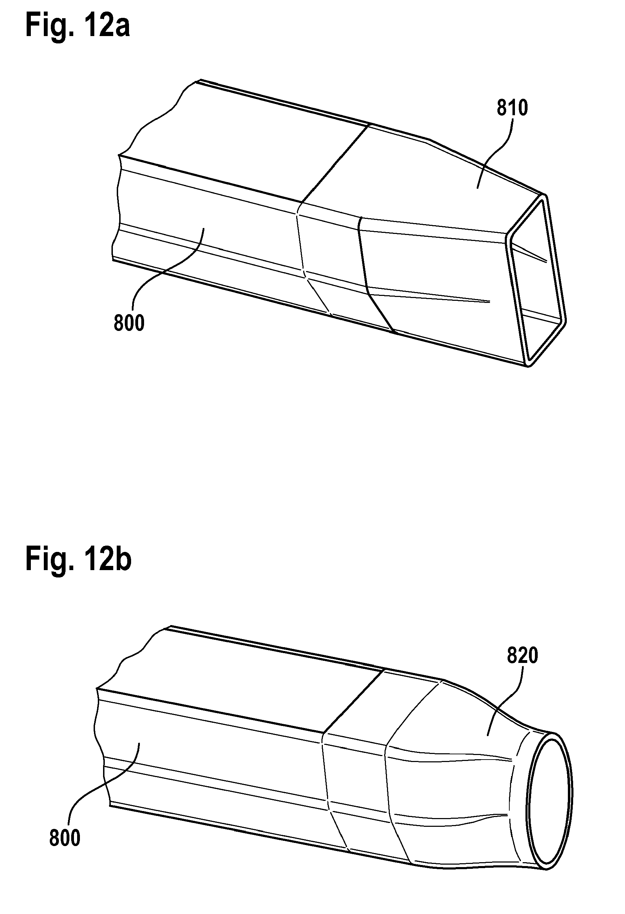

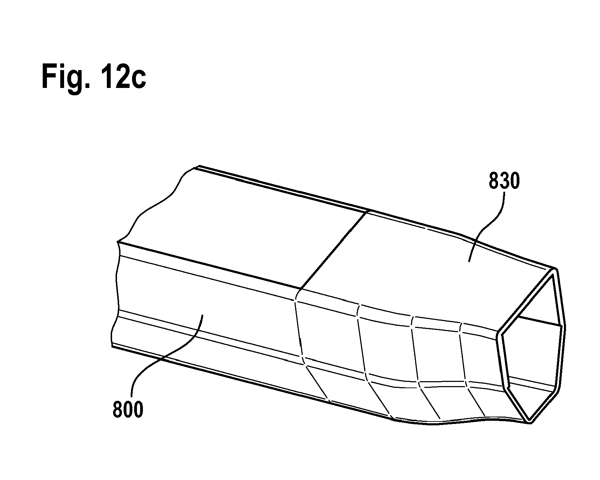

Die Figuren 1a und b zeigen eine U-förmige Ausgestaltung eines Rohres, welches beispielhaft bei einem Fahrradrahmen zur Aufnahme einer Energieversorgungseinheit vorgesehen ist. Eine Anordnung einer derartigen Aufnahme am Unterrohr des Fahrradrahmens ist in Figur 2 abgebildet. Die Figuren 3a bis c zeigen weitere beispielhafte Anordnung der Aufnahme an einem Fahrradrahmen. Mit den Figuren 4a und b wird ein erstes erfindungsgemäßes Ausführungsbeispiel gezeigt. Die Figuren 5a und b zeigen ein zweites erfindungsgemäßes Ausführungsbeispiel. In der Figur 6 ist ein drittes erfindungsgemäßes Ausführungsbeispiel dargestellt. Die Figuren 7a und b zeigen ein viertes erfindungsgemäßes Ausführungsbeispiel. Mit der Figur 8 wird eine Ergänzung zu den vorherigen Ausführungsbeispielen gezeigt. In der Figur 9 wird beispielhaft die Aufnahme der Energieversorgungseinheit im ersten Ausführungsbeispiel mittels eines zusätzlichen Halteelements dargestellt. Die Figuren 10, 11a und b stellen alternative Ausgestaltungen des Bodens des Fahrradrahmenrohres dar. In den Figuren 12a bis c sind verschiedene Anschlusstücke bzw. Endkappen des Fahrradrahmenrohrs abgebildet.

### Offenbarung der Erfindung

Wie eingangs bereits ausgeführt, werden bei den derzeit gebräuchlichen Elektrofahrrädern die für den Antrieb benötigten Energiespeicher typischerweise als Anbauprodukte an den vorgefertigten Fahrradrahmen vorgesehen. Um jedoch diese zusätzlichen Anbauten zu verhindern, die zudem auch teilweise den Fahrkomfort schmälern, z.B. indem zu wenig Anbaumöglichkeiten für Pumpe oder Trinkflaschen übrig bleiben, kann vorgesehen sein, den Energiespeicher als entfernbares Element in den Fahrradrahmen zu integrieren.

Eine mögliche Ausgestaltung eines Rahmenelements 10, der die Aufnahme einer Energiespeichereinheit ermöglicht, ist in den Figuren 1a und b dargestellt. Durch eine entsprechend Aufnahme 20 in dem U-förmigen Rahmenelement 10 kann so ein einfacher Einsatz der Energiespeichereinheit ermöglicht werden. Zusätzlich kann in das Rahmenelement 10 noch ein Halteelement eingefügt werden, welches die Energiespeichereinheit arretiert und kontaktiert, wie es beispielsweise in der DE 20 2013 008187 U1 oder DE 20 2014 005818 U1 gezeigt wird.

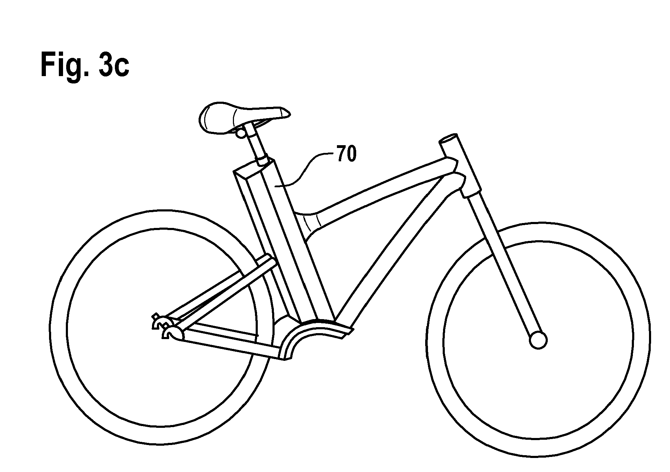

Ein derartig ausgestaltetes Rahmenelement 10 kann dabei als Unterrohr 40 zur Aufnahme eines Akkumulators 30 verwendet werden, wie es Figur 2 zeigt. Zum Austausch der Energieversorgungseinheit kann diese einfach nach oben entnommen werden. Alternativ kann die Aufnahme der Energieversorgungseinheit 30 jedoch auch im Oberrohr 50 oder im Sattelrohr 60 vorgesehen sein. So ist beispielhaft in der Figur 3a die Situation der Verwendung eines zur Aufnahme der Energieversorgungseinheit vorgesehenen Rahmenelements 55 als Oberrohr gezeigt. Vorteilhafterweise wird hier auch die Entnahme des Energiespeichers nach oben erfolgen. Alternativ ist aber auch durch eine entsprechende Drehung der Aufnahme eine seitliche Entnahme oder sogar eine Entnahme nach unten möglich, falls die Arretierung entsprechend vorgesehen ist. Die Figuren 3b und c zeigen alternative Anordnungen der Aufnahme von Energiespeichereinheiten in das Sattelrohr. Während in Figur 3b die Aufnahme in das Rahmenelement 65 vor dem Sattel erfolgt, ist in der Figur 3c das Rahmenelement 70 derart ausgestalten, dass der Energiespeicher von der Seite oder sogar von oben eingeführt werden kann. In beiden Fällen kann das Rahmenelement sowohl gleichzeitig die Funktion des Sattelrohrs übernehmen als auch separat zum Sattelrohr angeordnet sein.

Der wesentliche Kern der Erfindung besteht darin, dass zusätzlich zu dem reinen U-Profil 120 des Rahmenelements 100 ein Zwischenboden 110 eingeführt wird, auf den die Energiespeichereinheit/der Akkumulator/die Batterie bzw. ein Halteelement für die Energiespeichereinheit/den Akkumulator/die Batterie aufgesetzt werden kann. Wie eingangs bereits erwähnt, kann dadurch die Stabilität und Robustheit des Belastung tragenden Rahmenelements 100 gesteigert werden.

Zur Verdeutlichung ist in den Figuren 4a und b ein erstes Ausführungsbeispiel der Erfindung dargestellt. In der U-förmigen Ausnehmung bzw. Aufnahme 180 des Rahmenelements 100, welche durch einen Boden 130 und Seitenwände 135 bzw. 140 gebildet wird, wird ein Zwischenboden 110 eingebracht, der als Aufsitzelement für den Energiespeicher bzw. eine Halterung für den Energiespeicher dient. Dieser Zwischenboden 110 ist dabei derart ausgestaltet, dass er wenigstens teilweise parallel zum Boden 130 der u-förmigen Aufnahme angeordnet ist. Über abgewinkelte Aufhängungen ist dieser Zwischenboden 110 mit den Seitenwänden 135 und/oder 140 des Rahmenelements 100 verbunden. Die Verbindung kann dabei durch ein Verschweißen, ein Vernieten oder Verkleben erfolgen. Alternativ kann auch vorgesehen sein, dass der Zwischenboden 110 und das Rahmenelement 100 einstückig, z.B. als Gussstück erzeugt wird. Weiterhin ist vorgesehen, dass die abgewinkelte Aufhängung auf jeder Seite aus wenigstens zwei geraden Einzelelementen besteht, die in einem Winkel von 135 bis 160° miteinander verbunden sind. Eine derartig abgewinkelte Aufhängung ermöglicht es, das ebenfalls abgewinkelte untere Ende des U-förmigen Rahmenelements hinsichtlich der Flächen- und Volumennutzung besser auszunutzen, insbesondere wenn die Seitenwände 135 und 140 des Rahmenelements ebenfalls abgewinkelt miteinander verbunden sind. Besonders vorteilhaft ist die Flächen- und Volumennutzung realisiert, wenn beide abgewinkelten Geometrien aufeinander abgestimmt sind.

Wie aus der Figur 4a zu entnehmen ist, wird der Zwischenboden 110 nicht über den kompletten Boden 130 der Aufnahme 180 angeordnet. Es ist vielmehr vorgesehen, dass der Zwischenboden 110 zumindest von einem Ende (siehe beispielhaft die Wand 170) der Ausnehmung 180 beabstandet angeordnet ist (siehe den Abstand 150 vor bzw. den Abstand 160 hinter dem Zwischenboden). Neben einer besseren Luftzirkulation, die u.a. zur Kühlung der Energiespeichereinheit sinnvoll ist, lässt sich so auch eine einfachere Reinigung durchführen. Darüber hinaus können auch unter dem Zwischenboden 110 elektrische Leitungen verlegt werden, um den Energiespeicher mit dem restlichen elektrischen Antrieb des Fahrrads zu verbinden. Auch hier ist ein leichterer Zugang zu diesen elektrischen Leitungen durch die Beabstandung möglich, beispielsweise bei einer Reparatur.

Optional kann bei dieser aber auch bei den nachfolgenden Ausführungsformen vorgesehen sein, dass statt eines durchgehenden Zwischenbodens 110 rechts und links an der Seitenwand L-förmige Aufnahmen angebracht sind (nicht gezeigt). Hierdurch kann trotz einer Bereitstellung der Auflage für den Energiespeicher ein noch leichterer Durchgriff auf den Boden des U-Profils ermöglicht werden.

Weiterhin kann auch alternativ zur Figur 4a bzw. b vorgesehen sein, dass das U-förmige Profil eine rundere Ausgestaltung hat. Hierbei wird der Zwischenboden so untergebracht, dass er einen möglichst breiten Aufsatz für die Energieversorgungseinheit bzw. ein entsprechendes Halteelement aufweist (nicht gezeigt).

Die weiteren Ausführungsbeispiele basieren auf dem Grundtypus der Figuren 4a und 4b, wobei einzelne Variationen eingeführt werden. So werden in dem zweiten Ausführungsbeispiel 5a bzw. 5b in dem Boden 230 des U-Profils 220 des Rahmenelements 200 Löcher bzw. Öffnungen 270 eingebracht (ein oder mehrere weitere Öffnungen können längs des Bodens 230 eingebracht werden, sind jedoch in der Figur 5a nicht gezeigt). Alternativ oder zusätzlich können auch in dem Boden des Zwischenbodens 210, welcher wie bereits im vorherigen Ausführungsbeispiel an den Seitenwänden 235 bzw. 240 befestigt ist, Löcher bzw. Öffnungen 280 eingebracht werden. Durch diese Löcher 270 bzw. 280 kann ein Luftstrom 290, z.B. von außen, geführt werden, mittels dem der Energiespeicher gekühlt werden kann. Hierbei ist darauf zu achten, dass der Energiespeicher nicht direkt auf dem Boden des Zwischenbodens 210 aufliegt, z.B. indem er auf den abknickenden Seitenwänden des Zwischenbodens 210 aufliegt oder auf seiner Unterseite Rippen mit geführten Grabenstrukturen aufweist. Alternativ kann auch ein Halteelement vorgesehen sein, wie es beispielhaft in der DE 20 2014 005818 U1 beschrieben wird, welches auf seiner Unterseite Rippen mit Grabenstrukturen zur Führung von elektrischen Leitungen und/oder Luftströmungen aufweist. Darüber hinaus erlauben auch in diesem Ausführungsbeispiel die Abstände 250 bzw. 260 vor bzw. hinter dem Zwischenboden 210 eine Führung des Luftstroms bzw. eine Luftverwirbelung zur Kühlung des Energiespeichers.

Ein drittes Ausführungsbeispiel ist in der Figur 6 dargestellt. Dabei wird ebenfalls das Rahmenelement 300 durch ein U-Profil 320 dargestellt, welches einen Boden 330 und Seitenwände 235 bzw. 340 aufweist. Im Gegensatz zu den vorherigen Ausführungsbeispielen ist hierbei jedoch vorgesehen, mehrere Zwischenböden 310 bis 316 anzubringen, die gemeinsam den Aufsatz des Energiespeichers bzw. des Halteelements für den Energiespeicher bilden. Alle Zwischenböden 310 bis 316 sind parallel in Längsrichtung der Ausnehmung im Rahmenelement 300 voneinander beabstandet, vorteilhafterweise in einem äquidistanten Abstand 370. Optional kann auch vorgesehen sein, dass nur der erste und letzte Zwischenboden 310 und 316 vorgesehen ist. Wie bereits bei den vorherigen Ausführungsbeispielen, ist ein Abstand 350 und/oder 360 zwischen den Zwischenböden und dem Ende der Ausnehmung vorgesehen. Es sei ausdrücklich darauf hingewiesen, dass auch bei diesem Ausführungsbeispiel optional Löcher oder Öffnungen im Boden 330 des U-Profils 320 vorgesehen sein können, um eine Belüftung du Kühlung gemäß dem zweiten Ausführungsbeispiel zu erreichen.

Gemäß einem vierten Ausführungsbeispiel eines erfindungsgemäßen Rahmenelements 400, welches in der Figur 7a bzw. um Querschnitt der Figur 7b dargestellt ist, kann neben einer ersten Art von Zwischenboden 410 eine zweite Art von Zwischenboden 470 vorgesehen sein. Diese zweite Art von Zwischenboden 470 kann dabei unabhängig von der ersten Art des Zwischenbodens 410 etwas oberhalb von diesem angeordnet sein, wie es der Querschnitt in Figur 7b zeigt. Durch diese Anordnung kann ein Verrutschen des Energiespeichers bzw. eines entsprechenden Halteelements verhindert werden, wenn die zweite Art von Zwischenböden 470 im Bereich des vorderen oder hinteren Endes der ersten Art von Zwischenböden 410 angebracht ist. Zu diesem Zweck sollte der Abstand 475 zum Boden 430 des U-Profils 420 wenigstens um die Dicke des Bodens der ersten Art von Zwischenboden 410 größer als der Abstand 415 sein.

Bei der Anordnung der beiden Arten von Zwischenböden in Längsrichtung der Ausnehmung kann ein zumindest teilweiser Überlapp vorliegen aber auch eine Anordnung mit einem Abstand. Darüber hinaus kann diese zweite Art von Zwischenböden 470 ebenfalls eine Abstand zu den Enden der Aufnahme aufweisen. Alternativ kann die zweite Art von Zwischenböden auch direkt an die Wand anschließen oder sogar mit ihr verbunden sein.

Zu erwähnen sei, dass sowohl die erste Art als auch die zweite Art von Zwischenböden an den Seitenwänden 435 bzw. 440 des U-Profils 420 befestigt werden kann. Weiterhin kann vorgesehen sein, dass zumindest einem der Zwischenböden der zweiten Art eine Arretierung bzw. eine elektrische Kontaktierung für die Energiespeichereinheit bzw. das Halteelement zugeordnet ist. Dies kann dadurch realisiert werden, dass auf dem Zwischenboden zweiter Art ein Schloss oder ein Kontaktierungsstecker angebracht ist.

Um die Steifigkeit bzw. die Festigkeit des Rahmenelements gegen die typischen Beanspruchungen eines Fahrradrahmens, bei dem ein derartiges Rahmenelement zum Einsatz kommt, zu erhöhen, kann vorgesehen sein, das Volumen zwischen dem U-Profil 520 des Rahmenelements 500, bestehend aus Boden 530 und Seitenwänden 535 bzw. 540, und dem Zwischenboden 510 mit einem entsprechenden Material 550 wenigstens teilweise zu verfüllen. Denkbar sind hier neben Duroplasten auch eine Ausgestaltung des Volumens als Vollmaterial, bestehend aus dem Material des Rahmenelements.

In der Figur 9 wird beispielhaft die Verwendung eines Halteelements 560 für einen Akkumulator 570 gezeigt, welches auf einem Zwischenboden 510 aufsitzt. Unterhalb des Zwischenbodens ist ein Füllmaterial 550 eingebracht, welches zusätzlich oder alternativ zu den vorstehend erwähnten Funktionen der Erhöhung der Steifigkeit auch dazu genutzt werden kann, das Halteelement 560 bzw. den Energiespeicher/den Akkumulator 570 zu kühlen bzw. die erzeugte Wärme abzutransportieren.

Mit einem fünfte Ausführungsbeispiel wird gemäß der Figur 10 gezeigt, dass ein Zwischenboden auch in Form eines T-Trägers 610 erzeugt werden kann. Dabei ist dieser T-Träger 610 vorzugsweise mittig auf dem Boden 630 des U-Profils 620 angebracht. Eine Befestigung an einem der Seitenwände 635 bzw. 640 ist nicht notwendig. Hinsichtlich der Kraftverteilung hat dieses Ausführungsbeispiel gewisse Vorteile, da die Gewichtskraft des Energiespeichers direkt senkrecht nach unten auf den T-Träger 610 wirkt. Wie bereits bei den bisherigen Ausführungsbeispielen kann auch hier vorgesehen sein, dass der T-Träger nicht auf der gesamten Länge des Bodens 630 angeordnet ist und jeweils zu den Enden der Ausnehmung einen Abstand aufweist. Alternativ kann aber auch vorgesehen sein, dass der T-Träger 610 durchgehend am Boden 630 angeordnet ist. Hierbei können ebenfalls unterhalb des Bodens des T-Trägers 610 die Zwischenräume zur Verlegung von elektrischen Leitungen genutzt werden.

Optionale weitere Ausgestaltungen, ggf. in Kombination mit einem der vorhergehenden Ausführungsformen, sind in den Figuren 11a und b dargestellt. In dem Rahmenelement 700 gemäß der Figur 11a wird der Boden 730 des U-Profils 740 partiell verdickt, um so eine höhere Auflageebene für den Energiespeicher bzw. ein Halteelement bereit zu stellen. Diese Verdickung 710 ist dabei vorteilhafterweise zentral in der Mitte des Bodens 730 vorgesehen und benötigt ebenfalls wie im vorgenannten Ausführungsbeispiel keine Befestigung an der Wand 735 bzw. 740 des U-Profils. Auch bei dieser Ausführung kann die Verdickung sowohl durchgehend längs der Ausnahme vorgesehen sein, aber auch unterbrochen oder mit einem Abstand zu wenigstens einem Ende der Ausnehmung.

Die Ausgestaltung des Bodens 760 gemäß dem Ausführungsbeispiel nach Figur 11 b stellt im Wesentlichen die negative Ausgestaltung der Ausführung nach Figur 11a dar. Hierbei wird eine zentrale Vertiefung 750 in den Boden 760 des U-Profils eingebracht. Durch die übrig gebliebenen Wülste an beiden Seiten des Bodens wird so eine weiterer Boden definiert, auf dem der Energiespeicher bzw. das Halteelement aufsitzen kann. In der Vertiefung 750, die sowohl durchgehend längs entlang der Ausnehmung verlaufen kann als auch nur abschnittsweise, können elektrische Leitungen verlegt werden. Die Verdickungen an den Seiten des Bodens 760 ermöglichen eine Erhöhung der Stabilität des Rahmenelements 770 mit minimalem Materialeinsatz.

Zur Befestigung der vorstehend beschriebenen Rahmenelemente können unterschiedliche Anschlusstücke verwendet werden, um den Übergang vom U-förmigen Rahmenelement zu den üblichen röhrenförmigen Rahmenelementen herzustellen. So kann der Übergang in ein rechteckiges Anschlussstück 810 gemäß der Figur 12a, in ein rundes Anschlussstück 820 gemäß der Figur 12b oder ein vieleckiges Anschlussstück 830, welches dem U-Profil mit einem Deckel entspricht, vorgesehen sein.

Es sei darauf ausdrücklich darauf hingewiesen, dass diese Erfindung auch die Kombination der Merkmale der einzelnen Ausführungsbeispiele beansprucht.

## Patentansprüche

1. Rahmenelement (100, 200, 300, 400, 500, 600, 700) für einen Fahrradrahmen,
welches zur Aufnahme einer Energieversorgungseinheit (570), insbesondere eines Akkumulators, geeignet ist,
wobei das Rahmenelement (100, 200, 300, 400, 500) ein Sattelrohr (60), ein Unterrohr (40) oder ein Oberrohr (50) repräsentiert, welches wenigstens abschnittsweise ein U-Profil mit einer länglichen Ausnehmung (180) zur Aufnahme der Energieversorgungseinheit (570) aufweist,
**dadurch gekennzeichnet, dass**
in dem U-Profil (120, 220, 320, 420, 520) wenigstens ein Zwischenboden (110, 210, 310, 312, 314, 316, 410, 470, 510, 610, 710) vorgesehen ist, der wenigstens teilweise parallel zum Boden (130) des U-Profils beabstandet angeordnet ist.

2. Rahmenelement (100, 200, 300, 400, 500, 600, 700) nach Anspruch 1,
**dadurch gekennzeichnet, dass** die Seitenwände des U-Profils (120, 220, 320, 420, 520) wenigstens zwei gerade Bereiche (135, 140, 235, 240, 335, 340, 435, 440, 535, 540, 635, 640, 735, 740) aufweisen, die mittels eines stumpfen Winkels miteinander verbunden sind, insbesondere mit einem Winkel von 135 bis 160°.

3. Rahmenelement (100, 200, 300, 400, 500, 600, 700) nach einem der vorhergehenden Ansprüche, **dadurch gekennzeichnet, dass** der wenigstens eine Zwischenboden (110, 210, 310, 312, 314, 316, 410, 470, 510, 610, 710) nur über einem Teil des Bodens des U-Profils angeordnet ist, wobei insbesondere vorgesehen ist, dass der wenigstens eine Zwischenboden beabstandet (150, 160, 250, 260, 350, 360, 450, 460) von wenigstens einem Ende (170) der Ausnehmung (180) des U-Profils angeordnet ist.

4. Rahmenelement (200, 300) nach einem der vorhergehenden Ansprüche,
**dadurch gekennzeichnet, dass** der Boden (210) des U-Profils (220) und/oder des wenigstens einen Zwischenbodens (210) Öffnungen (270, 280) aufweist, insbesondere zur Durchleitung eines Luftstroms (290).

5. Rahmenelement (300, 400) nach einem der vorhergehenden Ansprüche,
**dadurch gekennzeichnet, dass** wenigstens zwei Zwischenböden (310, 312, 314, 316, 410, 470) vorgesehen sind, die parallel längs der Ausnehmung voneinander beabstandet (370) angeordnet sind.

6. Rahmenelement (400) nach einem der vorhergehenden Ansprüche, **dadurch gekennzeichnet, dass** wenigstens ein erster Zwischenboden (410) mit einem ersten Abstand (415) und wenigstens ein zweiter Zwischenboden (470) mit einem zweiten Abstand (475) zum Boden (430) des U-Profils (420) angeordnet sind, wobei vorgesehen ist, dass der zweite Abstand (475) größer als der erste Abstand (475) ist, insbesondere größer als die Dicke des Bodens des ersten Zwischenbodens (410).

7. Rahmenelement (400) nach Anspruch 6, **dadurch gekennzeichnet, dass** in Längsrichtung der Ausnehmung jeweils vor und hinter einem ersten Zwischenboden (410) ein zweiter Zwischenboden (470) angeordnet ist, wobei insbesondere vorgesehen ist, dass wenigstens ein zweiter Zwischenboden (470) am Ende der Ausnehmung angeordnet ist.

8. Rahmenelement (100, 200, 300, 400, 500) nach einem der vorhergehenden Ansprüche, **dadurch gekennzeichnet, dass** der Raum zwischen dem Boden des U-Profils und dem Boden wenigstens eines Zwischenbodens mit einem Material verfüllt ist, insbesondere einem Material, welches die Steifigkeit des U-Profils erhöht.

9. Rahmenelement (100, 200, 300, 400, 500) nach einem der vorhergehenden Ansprüche, **dadurch gekennzeichnet, dass** der wenigstens eine Zwischenboden an den Seitenwänden des U-Profils befestigt ist, insbesondere über eine Aufhängung, die zwei Elemente aufweist, wobei die beiden Elemente mittels eines stumpfen Winkels miteinander verbunden sind, insbesondere mit einem Winkel von 135 bis 160°.

10. Rahmenelement (600) nach einem der vorhergehenden Ansprüche 1 bis 9, **dadurch gekennzeichnet, dass** der wenigstens eine Zwischenboden als T-Träger (610) auf dem Boden des U-Profils angeordnet ist.

11. Fahrradrahmen mit einem Rahmenelement nach einem der Ansprüche 1 bis 10, wobei das Rahmenelement ein Sattelrohr (60), ein Unterrohr (40) oder ein Oberrohr (50) repräsentiert, welches wenigstens abschnittsweise ein U-Profil mit einer Ausnehmung zur Aufnahme der Energieversorgungseinheit aufweist,
**dadurch gekennzeichnet, dass**
in dem U-Profil wenigstens ein Zwischenboden (110, 210, 310, 312, 314, 316, 410, 470, 510) vorgesehen ist, der wenigsten teilweise parallel zum Boden des U-Profils beabstandet angeordnet ist.

12. Fahrrad, insbesondere ein elektrisch antreibbares Fahrrad, mit einem Fahrradrahmen nach Anspruch 11 oder einem Rahmenelement nach einem der Ansprüche 1 bis 10,
wobei das Rahmenelement ein Sattelrohr (60), ein Unterrohr (40) oder ein Oberrohr (50) repräsentiert, welches wenigstens abschnittsweise ein U-Profil mit einer Ausnehmung zur Aufnahme der Energieversorgungseinheit aufweist,
**dadurch gekennzeichnet, dass**
in dem U-Profil wenigstens ein Zwischenboden (110, 210, 310, 312, 314, 316, 410, 470, 510) vorgesehen ist, der wenigstens teilweise parallel zum Boden des U-Profils beabstandet angeordnet ist.

13. Fahrrad nach Anspruch 12, **dadurch gekennzeichnet, dass** in dem Rahmenelement ein Halteelement zur Halterung einer Energieversorgungseinheit vorgesehen ist, welches wenigstens teilweise auf dem Zwischenboden aufsitzt.
